# EUROPÄISCHE PATENTSCHRIFT

(11) **EP 0 716 295 B1**
(45) Veröffentlichungstag und Bekanntmachung des Hinweises auf die Patenterteilung: **26.01.2000**
(21) Anmeldenummer: 95115463.2
(22) Anmeldetag: 29.09.1995
(51) Int. Cl.: G01M 1/02

(54) **Verfahren zum Einstellen einer anzeigbaren Maschinenfunktion einer Radauswuchtmaschine und Radauswuchtmaschine**
Balancing machine and procedure for setting up and indicating a machine function in this balancing machine
Machine d'équilibrage et procédé d'établissement d'une fonction de machine avec indication de cette fonction pour cette machine d'équilibrage

(30) Priorität: 09.12.1994 DE 4443963
(43) Veröffentlichungstag der Anmeldung: 12.06.1996
(73) Patentinhaber: HOFMANN WERKSTATT-TECHNIK GMBH, D-64319 Pfungstadt (DE)
(72) Erfinder: Humber, Kurt, D-64347 Griesheim (DE)
(74) Vertreter: Nöth, Heinz, Dipl.-Phys.

(56) Entgegenhaltungen:
- DE-A- 4 122 844
- US-A- 4 331 954

## Beschreibung

Die Erfindung betrifft ein Verfahren nach dem Oberbegriff des Patentanspruches 1 sowie eine Radauswuchtmaschine nach dem Oberbegriff des Patentanspruches 4.

Bei Radauswuchtmaschinen ist es bekannt, mit Hilfe von Funktionstasten Maschinenfunktionen anzuzeigen und einzustellen. Hierdurch benötigt man ein zusätzliches Tastaturfeld mit verschiedenen, den jeweiligen Maschinenfunktionen zugeordneten Tasten. Die jeweils eingestellte Maschinenfunktion kann mit Hilfe einer Anzeigeeinrichtung auf einem Anzeigefeld oder auch an einem Bildschirm durch Wiedergabe angezeigt werden.

Aufgabe der Erfindung ist es, ein Verfahren und eine Radauswuchtmaschine der eingangs genannten Art zu schaffen, bei denen mit verringertem Aufwand die verschiedenen Maschinenfunktionen der Radauswuchtmaschine eingestellt werden können.

Diese Aufgabe wird beim Verfahren der eingangs genannten Art erfindungsgemäß durch die kennzeichnenden Merkmale des Patentanspruches 1 und bei der Radauswuchtmaschine durch die kennzeichnenden Merkmale des Anspruchs 4 gelöst.

Bei der Erfindung wird ein ohnehin an der Radauswuchtmaschine vorhandenes Tastorgan, mit dem Radabmessungen abgetastet werden können, für die Einstellung der gewünschten Maschinenfunktion, welche gleichzeitig angezeigt wird, verwendet. Dabei wird die Bewegung des Tastorgans gegenüber dem Maschinengehäuse für die Einstellung der Maschinenfunktionen ausgenützt. Hierzu kann durch die Bewegung des Tastorgans eine Wandlereinrichtung betätigt werden, welche in Abhängigkeit von der Bewegung des Tastorgans elektrische Signale erzeugt, die an eine Funktionseinstelleinrichtung in der Maschinenelektronik zur Einstellung der gewünschten Maschinenfunktion weitergeleitet werden. Gleichzeitig werden die elektrischen Signale an eine Anzeigeeinrichtung geliefert, an welcher die gewünschte Maschinenfunktion angezeigt wird. Dies kann dadurch erfolgen, daß die einzustellende Maschinenfunktion einzeln angezeigt wird oder daß mit Hilfe eines Cursers auf einer Anzeigefläche eines Bildschirms, auf welcher mehrere Maschinenfunktionen durch Pictogramme oder sonstwie aufgezeichnet sind, die einzustellende Maschinenfunktion bezeichnet wird.

Das Tastorgan zum Abtasten von Radabmessungen kann dazu dienen, daß für die Meßelektronik der Radauswuchtmaschine entsprechende Radabmessungen (Radius und Ausgleichsebene bzw. Ausgleichsebenen) abgetastet werden. Das Tastorgan kann jedoch ferner zusätzlich noch dazu dienen, daß mit seiner Hilfe die Ausgleichsstelle, an welcher das Unwuchtausgleichsgewicht am Scheibenrad zu befestigen ist, nach Durchführung des Meßlaufes aufgefunden wird (DE 42 29 865 A1).

Bei den einzustellenden Maschinenfunktionen kann es sich neben dem Abtasten der Radabmessungen um die Durchführung des Unwuchtmeßlaufs, um den Eindrehvorgang in die Ausgleichswinkellage, um den Ausgleichsvorgang sowie um den Start und Stop der jeweiligen Maschinenfunktionen und dergl. handeln.

Für die Einstellung der Maschinenfunktionen können verschiedene Bewegungsformen des Tastorgans ausgenützt werden. Beispielsweise kann die Verschwenkbarkeit des Tastorgans um einen Drehpunkt bzw. um eine Drehachse zur Erzeugung entsprechender Wandlersignale, mit denen die Funktionseinstelleinrichtung angesteuert wird, ausgenützt werden. Ferner können Signale in Abhängigkeit unterschiedlicher Auszugslängen des Tastorgans, wenn dieses beispielsweise als teleskopierbare Taststange ausgebildet ist, ausgenützt werden. Wenn mit Hilfe des Tastorgans ein Curser auf der Anzeigefläche eines Wiedergabegeräts, beispielsweise eines Bildschirms, bewegt wird, können durch die Drehbewegung und die Auszugslänge des Tastorgans X- und Y-Richtungen in einem rechtwinkligen Koordinatensystem für die Curserbewegung auf der Anzeigefläche ausgenützt werden. Hierdurch kann die Bewegung des Cursers beispielsweise in X-Richtung und in Y-Richtung und auch zur Steuerung einer in beiden Richtungen überlagerten Bewegung bei gleichzeitiger Verschwenkung und Veränderung der Auszugslänge ausgenützt werden. Die von der Wandlereinrichtung hierzu erzeugten Signale werden an eine Curserbewegungseinrichtung der Anzeigeeinrichtung geliefert.

Mit Hilfe einer Schalteinrichtung ist es möglich, entweder unterschiedliche Wandlereinrichtungen mit dem Tastorgan zu verbinden, um die Radabmessungen abzutasten und die Maschinenfunktionen einzustellen oder es kann jeweils dieselbe Wandlereinrichtung verwendet werden, wobei die von der Wandlereinrichtung erzeugten elektrischen Signale entweder an die Meß- und Auswerteelektronik beim Abtasten der Radabmessungen oder an die Funktionseinstelleinrichtung und die Anzeigeeinrichtung bei der Einstellung der Maschinenfunktion weitergeleitet werden.

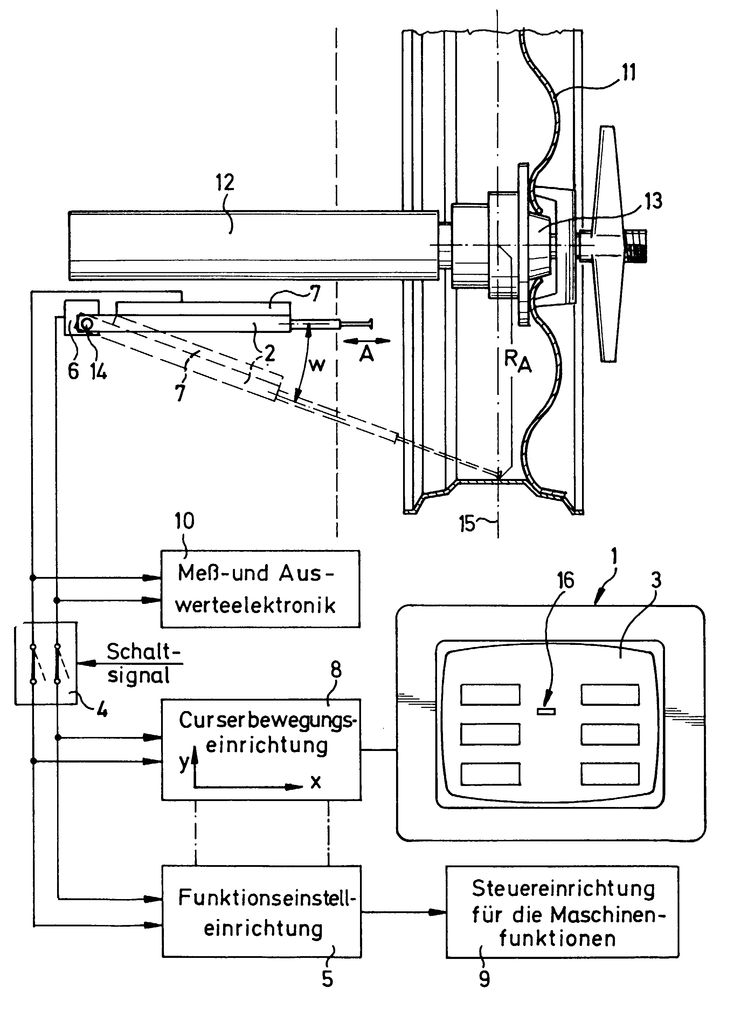

Anhand der Figur wird an einem Ausführungsbeispiel die Erfindung noch näher erläutert. Die Figur zeigt schematisch eine Radauswuchtmaschine mit erforderlichen Bauelementen, die zum Teil in einem Blockschaltbild dargestellt sind.

Die Figur zeigt ein mittels einer Spanneinrichtung 13 auf eine Meßspindel 12 einer Radauswuchtmaschine aufgespanntes Scheibenrad 11 eines Kraftfahrzeugrades. Es ist bekannt, mit Hilfe eines als Taststange ausgebildeten Tastorgans 2 Radabmessungen, z.B. einen Radius R_{A} für eine Ausgleichsebene, in welcher ein Ausgleichsgewicht, beispielsweise Klebegewicht, für den Unwuchtausgleich zu befestigen ist, abzumessen. Ferner kann der Abstand einer Ausgleichsebene 15 von einem Maschinenbezugspunkt gemessen werden. Hierzu ist das Tastorgan 2 um eine Schwenkachse 14 schwenkbar (Doppelpfeil w) und in seiner Auszugslänge variabel (Doppelpfeil A).

Die Auszugslänge kann von einem Wandler 7 abgetastet und in ein entsprechendes elektrisches Signal umgewandelt werden. Ferner ist ein Wandler 6 vorgesehen, der den Schwenkwinkel um die Schwenkachse 14 abtastet und ebenfalls in ein elektrisches Signal umwandelt. In bekannter Weise werden diese Wandlersignale einer Meß- und Auswerteelektronik 10 zugeführt und werden bei der Berechnung der in den jeweiligen Ausgleichsebenen 15 zu befestigenden Ausgleichsgewichte in bekannter Weise ausgewertet.

Beim dargestellten Ausführungsbeispiel können die elektrischen Signale der Meßwandler 6 und 7 der Wandlereinrichtung über eine Schalteinrichtung 4 ferner einer Funktionseinstelleinrichtung 5 und gleichzeitig zur Steuerung einer Anzeigeeinrichtung 1 weitergeleitet werden. Die Schalteinrichtung 4 wird mit Hilfe eines Schaltsignals, das beispielsweise durch eine bestimmte Bewegung des Tastorgans 1 oder durch eine Fuß- oder Handtaste oder dergl. erzeugt werden kann, betätigt.

Beim dargestellten Ausführungsbeispiel werden die Wandlersignale über eine Curserbewegungseinrichtung 8 zur Anzeigeeinrichtung 1 weitergeleitet.

Die Curserbewegungseinrichtung 8 steuert die Bewegung eines Cursers 16 auf einer Anzeigefläche 3 der Anzeigeeinrichtung 1. Auf der Anzeigefläche 3 können mehrere Maschinenfuktionen in Form von Pictogrammen dargestellt sein. Durch die Curserbewegungseinrichtung 8 wird der Curser 16 auf der Anzeigefläche 3 zu dem Pictogramm geführt, welches die gewünschte Maschinenfuktion darstellt.

Zur Curserbewegung kann sowohl die vom Wandler 6 abgetastete Schwenkbewegung des Tastorganes 2 als auch die vom Wandler 7 abgetastete Auszugsbewegung des Tastorganes 2 ausgenützt werden. Dabei kann beispielsweise die Schwenkbewegung und das vom Wandler 6 erzeugte elektrische Signal für eine Curserbewegung in Y-Richtung ausgewertet werden und das der Auszugslänge entsprechende Signal des Wandlers 7 für eine Bewegung in X-Richtung. Beide Bewegungsrichtungen können auch überlagert zur Bewegungssteuerung des Cursers 16 eingesetzt werden.

Gleichzeitig wird in der Funktionseinstelleinrichtung 5 die gleiche Maschinenfunktion adressiert, welche auf der Anzeigefläche 3 vom Curser 16 bezeichnet wird. Ein der eingestellten Maschinenfunktion entsprechendes Signal wird an eine Steuereinrichtung 9 für die Maschinenfunktionen weitergegeben, so daß von der Radauswuchtmaschine die eingestellte Funktion ausgeführt wird.

Wie durch strichlierte Verbindungslinien dargestellt, können die elektrischen Signale der Wandler 6 und 7 auch über die Curserbewegungseinrichtung 8 der Funktionseinrichtung 5 zugeleitet werden.

Ferner ist es möglich, anstelle einer Anzeigefläche 3, auf welcher gleichzeitig mehrere Maschinenfunktionen durch Pictogramme oder schriftbildlich dargestellt sind, eine kleinere Anzeigefläche zu verwenden, auf der aufeinanderfolgend die jeweiligen Maschinenfunktionen durch die Bewegung des Tastorganes 2 aufgerufen werden können. Hierzu genügt u.U. eine einzige Bewegungsart des Tastorganes 2, beispielsweise die Schwenkbewegung, wobei dann in Abhängigkeit von den jeweiligen Schwenkwinkeln elektrische Wandlersignale erzeugt werden, die zum Nacheinanderaufrufen der Maschinenfunktionen auf der Anzeigefläche verwendet werden. Die auf der Anzeigefläche ausgewählte und bezeichnete Maschinenfunktion wird dann ebenfalls in der Funktionseinstelleinrichtung 5 adressiert und durch ein entsprechendes Signal wird die Steuereinrichtung 9 für die Maschinenfunktionen aktiviert.

Verschiedenen Winkelstellungen des Tastorganes 2 um die Schwenkachse 14 und/oder verschiedenen Auszugslängen des Tastorganes 2 entsprechen in der Funktionseinstelleinrichtung 5 beispielsweise in einer Speichereinrichtung abgelegten Maschinenfunktionen, die gleichzeitig an der Anzeigefläche 3 des Anzeigegerätes 1 angezeigt werden. Auf diese Weise erreicht man die Integration zusätzlicher Funktionen in die Betätigung des Tastorganes 2. Hierdurch läßt sich ein zusätzliches Tastenfeld für die Einstellung der Maschinenfunktionen an der Radauswuchtmaschine einsparen.

## Patentansprüche

1. Verfahren zum Einstellen einer anzeigbaren Maschinenfunktion einer Radauswuchtmaschine,
dadurch **gekennzeichnet,**
daß die Maschinenfunktion durch ein am Maschinengehäuse beweglich gelagertes Tastorgan, mit dem Radabmessungen abtastbar sind, an der Anzeige bezeichnet und eingestellt wird.

2. Verfahren nach Anspruch 1, dadurch gekennzeichnet, daß unterschiedliche Bewegungsformen des Tastorgans in elektrische Signale umgewandelt werden und daß mit diesen Signalen die Bezeichnung der einzustellenden Maschinenfunktion an der Anzeige und die Einstellung der Maschinenfunktion in der Maschinenelektronik gesteuert werden.

3. Verfahren nach Anspruch 1 oder 2, dadurch gekennzeichnet, daß das Tastorgan zur Bezeichnung der Maschinenfunktion an der Anzeige und zum Einstellen der Maschinenfunktion in der Maschinenelektronik um eine Achse bzw. einen Drehpunkt am Maschinengehäuse gedreht und in seiner Längsausdehnung verstellt wird.

4. Radauswuchtmaschine mit einem am Maschinengehäuse beweglich angeordneten Tastorgan zum Abtasten von Radabmessungen und einer Anzeigeeinrichtung zum Anzeigen einer eingestellten Maschinenfunktion, dadurch gekennzeichnet, daß zur Durchführung eines Verfahrens nach Anspruch 1 eine Anzeigeeinrichtung (1), auf welcher bestimmte Maschinenfunktionen wiedergebbar sind, und eine Funktionseinstelleinrichtung (5) zum Einstellen der Maschinenfunktion in der Weise mit dem Tastorgan (2) verbindbar sind, daß durch die Bewegung des Tastorgans (2) eine angezeigte Maschinenfunktion in der Funktionseinstelleinrichtung (5) einstellbar ist.

5. Radauswuchtmaschine nach Anspruch 4, dadurch gekennzeichnet, daß eine Schalteinrichtung (4) vorgesehen ist, durch die die Funktionseinstelleinrichtung (5) für das Einstellen auf die angezeigte Maschinenfunktion an eine Wandlereinrichtung (6, 7) anschließbar ist, die in Abhängigkeit von den Bewegungen des Tastorgans (2) einstellbar ist und elektrische Signale für die Funktionseinstelleinrichtung (5) und die Anzeigeeinrichtung (2) erzeugt.

6. Radauswuchtmaschine nach Anspruch 4 oder 5, dadurch gekennzeichnet, daß durch unterschiedliche Bewegungsformen des Tastorgans (2) unterschiedliche elektrische Signale durch die Wandlereinrichtung (6, 7) für die Bezeichnung der einzustellenden Maschinenfunktion auf einer Anzeigefläche (3) der Anzeigeeinrichtung (2) gebildet werden.

7. Radauswuchtmaschine nach einem der Ansprüche 4 bis 6, dadurch gekennzeichnet, daß durch eine Schwenkbewegung um einen Schwenkpunkt bzw. Schwenkachse (4) und eine Auszugsbewegung des Tastorgans (2) Bewegungen eines Cursers in X- und Y-Richtung in einem rechtwinkligen Koordinatensystem auf der Anzeigefläche (3) steuerbar sind.

## Claims

1. A method of setting a displayable machine function of a wheel balancing machine, characterised in that the machine function is identified at the display and set by a sensing member which is mounted movably on the machine housing and with which wheel dimensions can be sensed.

2. A method according to claim 1 characterised in that different forms of movement of the sensing member are converted into electrical signals and that the identification of the machine function to be set at the display and setting of the machine function in the machine electronics are controlled with said signals.

3. A method according to claim 1 or claim 2 characterised in that for identification of the machine function at the display and for setting of the machine function in the machine electronics the sensing member is rotated about an axis or a pivot on the machine housing and displaced in its longitudinal extent.

4. A wheel balancing machine comprising a sensing member arranged movably on the machine housing for sensing wheel dimensions and a display device for displaying a set machine function, characterised in that for carrying out a method according to claim 1 a display device (1) on which given machine functions can be reproduced and a function setting device (5) for setting the machine function can be connected to the sensing member (2) in such a way that a displayed machine function can be set in the function setting device (5) by the movement of the sensing member (2).

5. A wheel balancing machine according to claim 4 characterised in that there is provided a switching device (4) by which the function setting device (5) for setting to the displayed machine function can be connected to a converter device (6, 7) which is settable in dependence on the movements of the sensing member (2) and produces electrical signals for the function setting device (5) and the display device (2).

6. A wheel balancing machine according to claim 4 or claim 5 characterised in that by virtue of different forms of movement of the sensing member (2) different electrical signals are formed by the converter device (6, 7) for identification of the machine function to be set on a display surface (3) of the display device (2).

7. A wheel balancing machine according to one of claims 4 to 6 characterised in that movements of a cursor in the X- and Y-directions in a rectangular co-ordinate system on the display surface (3) are controllable by a pivotal movement about a pivot point or pivot axis (4) and an extension movement of the sensing member (2).

## Revendications

1. Procédé de réglage d'une fonction, pouvant être affichée, d'une machine d'équilibrage de roue,
caractérisé en ce
que la fonction de machine est repérée et réglée sur le dispositif d'affichage par un organe de palpage qui est monté mobile sur le carter de machine et avec lequel on peut explorer des dimensions de roue.

2. Procédé selon la revendication 1, caractérisé en ce que différentes formes de déplacement de l'organe de palpage sont converties en signaux électriques et que le repérage de la fonction de machine à régler sur le dispositif d'affichage et le réglage de la fonction de machine dans l'électronique de machine sont commandés avec ces signaux.

3. Procédé selon la revendication 1 ou 2, caractérisé en ce que pour repérer la fonction de machine sur le dispositif d'affichage et pour régler la fonction de machine dans l'électronique de machine, on fait tourner l'organe de palpage autour d'un axe ou d'un point de rotation sur le carter de machine et on règle la longueur de cet organe.

4. Machine d'équilibrage de roue comportant un organe de palpage monté avec possibilité de déplacement sur le carter de machine pour explorer des dimensions de roue et un dispositif d'affichage pour afficher une fonction de machine réglée, caractérisée en ce que pour mettre en oeuvre un procédé selon la revendication 1, un dispositif d'affichage (1), sur lequel peuvent être reproduites des fonctions de machine définies, et un dispositif de réglage de fonction (5), destiné à régler la fonction de machine, sont reliés à l'organe de palpage (2) de telle sorte qu'une fonction de machine affichée peut être réglée dans le dispositif de réglage de fonction (5) par le déplacement de l'organe de palpage (2).

5. Machine d'équilibrage de roue selon la revendication 4, caractérisée en ce qu'il est prévu un dispositif de commutation (4) par l'intermédiaire duquel le dispositif de réglage de fonction (5) peut, pour régler la fonction de machine affichée, être raccordé à un dispositif convertisseur (6, 7) qui peut être réglé en fonction des déplacements de l'organe de palpage (2) et produit des signaux électriques pour le dispositif de réglage de fonction (5) et le dispositif d'affichage (1).

6. Machine d'équilibrage de roue selon la revendication 4 ou 5, caractérisée en ce que différentes formes de déplacement de l'organe de palpage (2) génèrent la formation par le dispositif convertisseur (6, 7) de différents signaux électriques pour le repérage de la fonction de machine à régler sur une surface d'affichage (3) du dispositif d'affichage (1).

7. Machine d'équilibrage de roue selon l'une des revendications 4 à 6, caractérisée en ce que des déplacements d'un curseur dans la direction X et la direction Y dans un système de coordonnées rectangulaires sur la surface d'affichage (3) peuvent être commandés par un pivotement autour d'un point de pivotement ou axe de pivotement (4) et par un déplacement de sortie de l'organe de palpage (2).
